Europäisches Patentamt

European Patent Office

Office européen des brevets

(19)

(11) Veröffentlichungsnummer : **0 077 554**
**B1**

(12) # EUROPÄISCHE PATENTSCHRIFT

(45) Veröffentlichungstag der Patentschrift :
18.09.85

(21) Anmeldenummer : 82109590.8

(22) Anmeldetag : 18.10.82

(51) Int. Cl.⁴ : **B 65 G 47/38**

(54) **Vorrichtung zum Entleeren von Behältern.**

(30) Priorität : 20.10.81 DE 3141514

(43) Veröffentlichungstag der Anmeldung :
27.04.83 Patentblatt 83/17

(45) Bekanntmachung des Hinweises auf die Patenterteilung : 18.09.85 Patentblatt 85/38

(84) Benannte Vertragsstaaten :
AT BE CH DE FR GB IT LI NL SE

(56) Entgegenhaltungen :
DE-A- 2 714 884
FR-A- 1 569 537
US-A- 2 666 537

(73) Patentinhaber : Gebhardt Fördertechnik GmbH
Postfach 304
D-6920 Sinsheim (DE)

(72) Erfinder : Felder, Hans Christian, Dipl.-Ing.
Forsthausstrasse 12
D-6022 Dreieichenhain (DE)

(74) Vertreter : Neugebauer, Bernhard
Tölzer Strasse 7
D-7100 Heilbronn (DE)

**Beschreibung**

Die Erfindung betrifft eine Vorrichtung zum Entleeren von mit übereinander liegendem, vorzugsweise flächigem Stückgut beladenen Behältern, die auf einer Transportbahn in den Entleerort transportiert werden, wo das Stückgut in die Entleerrichtung geneigt wird.

Aus der DE-A-27 14 884 ist bereits ein Fördersystem mit an einem Transportmittel dreh- und kippbar gelagerten Behältern bekannt. In der Entleerstation werden die Behälter um die vertikale Achse im rechten Winkel gedreht, so daß die Entleeröffnung in die Entleerrichtung zeigt. Dann wird gekippt, so daß die im Behälter liegenden Stückgüter abrutschen. Die Behälter stellen hierbei einen festen Bestandteil des Fördersystems dar und lassen sich daher nicht anderweitig verwenden. Ferner kann die Lage der Stückgüter zueinander beim Abrutschen nicht beeinflußt werden, so daß beispielsweise auch Stückgüter übereinander liegen können. Das automatische Ablesen einer aufgebrachten Kodierung ist damit nicht gewährleistet. Bekannt ist ferner aus der US-A-2,666,537 eine Sortiervorrichtung, bei der Transportschlitten vorgesehen sind, die in der Entleerstation einseitig über eine Schräge laufen. Der Transportschlitten wird so in Entleerrichtung geneigt, und das Stückgut rutscht nach unten. Das Entladen mehrerer übereinander liegender Stückgüter hintereinander ist ebenfalls nicht möglich. Bei allen bekannten Systemen zum Entleeren von Stückgütern stellen somit die Transportvorrichtungen Spezialausführungen dar, bei denen die das Stückgut aufnehmenden Behälter bzw. Schlitten einen festen Bestandteil der Transportvorrichtung darstellen. Ferner sind sie nicht zum geordneten Entleeren von übereinander liegenden Stückgütern geeignet. Das automatische Zuordnen der Stückgüter zu einem vorbestimmten Ziel ist daher nicht durchführbar.

Aufgabe der Erfindung ist es daher, das Entleeren von Behältern und Zuordnen der entladenen Stückgüter zu einem vorbestimmten Ziel zu mechanisieren.

Diese Aufgabe wird durch die Erfindung dadurch gelöst, daß die Entleervorrichtung eine Hubvorrichtung mit einem Stempel aufweist, der von unten durch einen Durchbruch in der Bodenebene des Behälters gegen das Stückgut bewegbar ist, wodurch das Stückgut über den Rand des Behälters angehoben wird, so daß es in Entleerrichtung abrutscht.

Die mit der Erfindung erzielten Fortschritte bestehen insbesondere darin, daß die Stückgüter durch das Neigen und Anheben im Behälter nacheinander abrutschen, also eine Kolonne von einzelnen Stückgütern bilden, die leicht geordnet und, da immer die gleiche Seite oben liegt, auch mechanisch abgelesen und sortiert werden können. Die Stückgüter können so wahllos in einen Behälter gelegt werden und treffen sicher am zugeordneten Ziel ein. Die Vorrichtung zum Entleeren von Behältern kann so für eine Vielzahl verschiedenartiger Stückgüter eingesetzt werden, um diese einem vorbestimmten Ziel zuzuführen.

Ausführungsbeispiele der Erfindung sind in der Zeichnung dargestellt und werden im folgenden näher erläutert. Es zeigen:

Figur 1 die Draufsicht einer Ausführungsform der Entleervorrichtung;

Figur 2 die Frontansicht einer Ausführungsform der Entleervorrichtung;

Figur 3 die Frontansicht einer weiteren Ausführungsform der Entleervorrichtung;

Figur 4 die Frontansicht einer anderen Ausführungsform der Entleervorrichtung;

Figur 5 einen Schnitt durch den Behälter und die Ansicht eines Stempels;

Figur 6 einen Schnitt durch eine andere Ausführungsform des Behälters;

Figur 7 die Draufsicht auf eine weitere Ausführungsform der Entleervorrichtung;

Figur 8 die Schnittansicht gem. Linie VIII-VIII in Fig. 7;

Figur 9 die Schnittansicht gem. Fig. 8 mit einem anderen Behälter;

Figur 10 einen Teilschnitt durch einen Behälter.

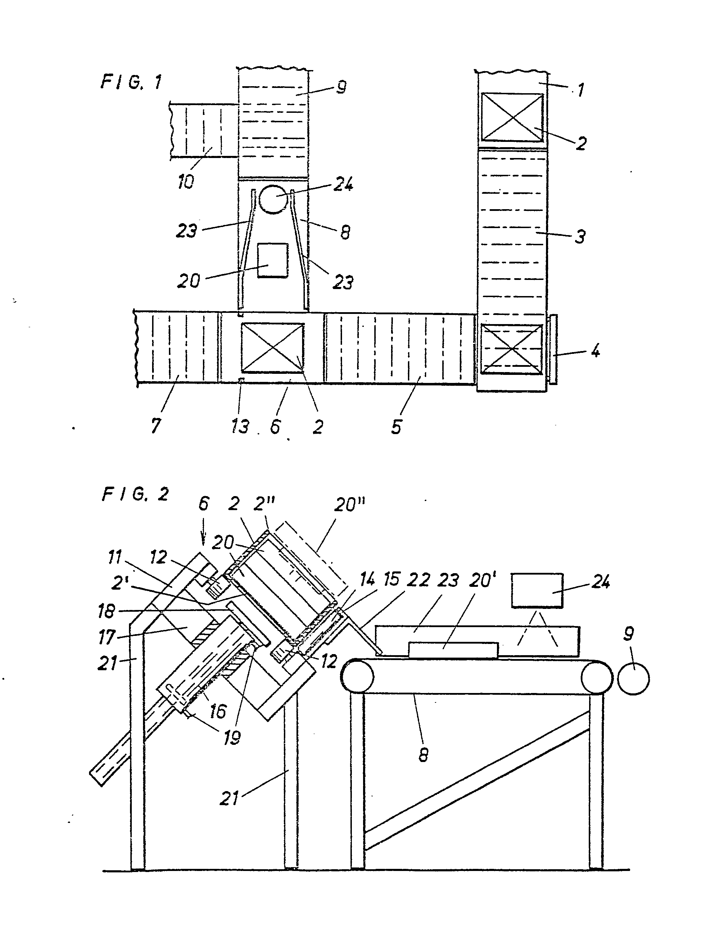

Die Vorrichtung zum Entleeren von Behältern ist gem. Fig. 1 in eine Transportanlage eingebaut, bei der auf einer Zuführtransportbahn 1 die beladenen Behälter 2 angeliefert werden. Der Transportbahn 1 schließt sich ein Staurollenförderer 3 an, an dessen Ende ein Querförderer 4 mit anschließender Rollenbahn 5 steht. Diese mündet in die Entleervorrichtung 6. In Transportrichtung der Rollenbahn 5 ist an die Entleervorrichtung 6 ein Lerrgutförderer 7 angeschlossen, während in Entleerrichtung ein Gurtförderer 8 vorgesehen ist, dem sich ein Förderer 9 mit Auschleusstationen 10 anschließt. Natürlich kann die Transportanlage auch in anderer, geeigneter Weise aufgebaut sein.

Im Ausführungsbeispiel der Fig. 2 geht die eingangs in üblicher Weise waagerecht angeordnete Rollenbahn 5 stetig in eine gegen die Entleerrichtung zum Gurtförderer 8 geneigte Lage über, um im gleicher Schräglage an die Entleervorrichtung 6 anzuschließen. Diese weist einen etwa um 45° geneigten Rahmen 11 auf, in dem zum Behältertransport eine aus Rollen bestehende Transportbahn 12 gelagert ist, die in nicht dargestellter Weise angetrieben wird. Sobald der Behälter 2 den Entleerort erreicht hat, wird durch Unterbrechen einer Lichtschranke 13 oder einer entsprechenden Positionier-Einrichtung (Fig. 1) der Transport stillgesetzt. Das Abrutschen des Behälters 2 in Neigungsrichtung verhindern in der Seitenwandebene angebrachte Rollen 14, die in einer auf dem Rahmen 11 aufgesetzten Halterung 15 drehbar gelagert sind. Mittig unterhalb des am Entleerort stehenden Behälters 2 ist ein hilfskraftbetätigter Stellzylinder 16 an einem am Rahmen 11 befestigten Steg 17 vorgesehen, dessen Kolbenstange einen Stempel 18 trägt. Das Druckmittel wird durch Leitungen 19 zu- und abgeleitet, so daß der Stempel 18 nach oben oder unten bewegt werden kann. Der Boden des über dem Stempel 18 befindlichen Behälters 2 weist einen Durchbruch 2' auf, durch den der Stempel 18 in den Behälter 2 eindringen und das darin gelagerte Stückgut 20 anheben kann. Der Rahmen 11 der Entleervorrichtung 6 ruht auf einem Gestell 21, so daß eine etwas unterhalb des oberen Randes 2" des Behälters 2 an der Halterung 15 befestigte Rutsche 22 dicht über dem Gurtförderer 8 endet. Auf letzterem sorgt eine Zentriereinrichtung 23 für die zentrische Einordnung der entladenen Stückgüter 20', so daß sie unter einer Leseeinrichtung 24 hindurchgleiten. Verwendbar sind alle Stückgüter 20, die eine Rutschfläche aufweisen und vorzugsweise übereinander stapelbar sind, also paket- oder päckchenförmig ausgebildet oder verpackt sind.

Es ist ersichtlich, daß ein von der Zuführtransportbahn 1 auf die Rollenbahn 5 gelangender Behälter 2 auf letzterer in die Schräglage gebracht wird und so auf die Transportbahn 12 der Entleervorrichtung 6 gleitet. In der Entleerposition wird durch die Lichtschranke 13 der Antrieb der Transportbahn 12 ausgeschaltet und der Stempel 18 durch Zufuhr von Druckmittel in den Stellzylinder 16 nach oben ausgefahren. Der Stempel 18 durchstößt den Durchbruch 2' im Boden des Behälters 2 und drückt die in diesem gelagerten Stückgüter 20 nach oben. Sobald das obere Stückgut 20" den oberen Rand 2" des Behälters 2 überstiegen hat, rutscht es in Entleerrichtung über die Rutsche 22 nach unten auf den Gurtförderer 8. Auf diesem wird das Stückgut 20' durch die Zentriereinrichtung 23 vermittelt, so daß es unter der Leseeinrichtung 24 hindurchgleitet, wobei die auf der Oberseite aufgebrachte Kodierung mechanisch abgelesen wird, so daß das Stückgut 20' an der zugeordneten Ausschleusstation 10 vom Förderer 9 ausgeleitet wird, um einer zusammenzustellenden Sendung, einem Sortimentlager o. dgl. zugeführt zu werden. Nach dem Entleeren des Behälters 2, wenn also der Stempel 18 seine obere, strichpunktiert dargestellte Endstellung erreicht hat, wird der Stempel 18 in seine Ausgangsstellung zurückbewegt, die Transportbahn 12 eingeschaltet und so der Behälter auf den Leergutförderer 7 übergeführt, auf dem er wieder zu einer Beladestation gelangt.

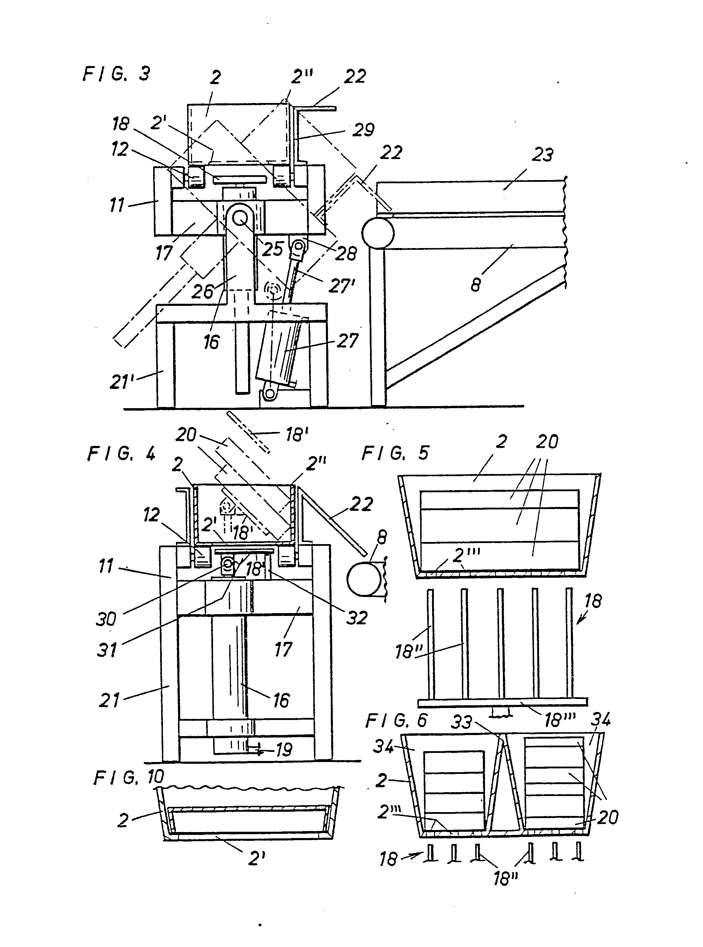

Im Ausführungsbeispiel der Fig. 3 ist der Rahmen 11 an einer zentralen Achse 25 an einer auf dem Gestell 21' befestigten Halterung 26 in Entleerichtung schwenkbar gelagert. In der mit durchgezogenen Linien dargestellten Transportstellung liegt die Ebene der Transportbahn 12 waagerecht und stimmt mit der ebenfalls mit waagerechter Ebene ausgebildeten Rollenbahn 5 überein, so daß ein Behälter 2 von dieser auf die Transportbahn 12 übergeführt werden kann. Zum Verschwenken um die Achse 25 dient ein Stellzylinder 27, der am Gestell 21' und dessen Kolbenstange 27' an einem Auge 28 des Rahmens 11 angelenkt ist, so daß er aus der Transportstellung in die strichpunktiert angedeutete Entleerstellung im Uhrzeigersinn schwenkbar ist, in der die Rutsche 22 auf den Gurtförderer 8 zeigt. Der Stellzylinder 16 für den Stempel 18 ist an der Halterung 26 gelagert und macht dessen Schwenkbewegung mit.

Die Funktionsweise entspricht der oben beschriebenen. Hat der Behälter 2 seine Entleerposition erreicht, wird der Transport gestoppt und der Rahmen 11 schwenkt mittels des Stellzylinders 27 im Uhrzeigersinn in die strichpunktiert dargestellte Entleerstellung, in der das Stückgut 20 durch den nach oben drückkenden Stempel 18 stückweise über die Rutsche 22 auf den Gurtförderer 8 rutscht. In der Entleerposition stützt sich der Behälter 2 an eine auf dem Rahmen 11 befestigte und die Rutsche 22 tragende Anschlagwand 29. Hat der Stempel 18 seine obere Endstellung erreicht, geht er und der Rahmen 11 in die Ausgangsstellung zurück und der Antrieb der Transportbahn 12 wird eingeschaltet, so daß der entleerte Behälter 2 auf den Leergutförderer 7 gelangt und auf diesem zu einer Beladestation transportiert wird.

Im Ausführungsbeispiel der Fig. 4 ist die Transportbahn 12 stationär in einer waagerechten Ebene und der Stempel 18' mit seinem Stellzylinder 16 entsprechend vertikal gelagert. Der Stempel 18' ist an eine Achse 30 exzentrisch an der Kolbenstange des Stellzylinders 16 angelenkt, so daß er eine Schwenkbewegung im Uhrzeigersinn ausführen kann, und zwar bis zum Auftreffen eines Anschlages 31 auf einem Gegenanschlag an der Kolbenstange, wie in der angehobenen Stellung strichpunktiert angedeutet ist. Der Stempel 18' wird in der Ruhestellung dicht unterhalb des zu entleerenden Behälters 2 durch einen rahmenfesten Anschlag 32 in der waagerechten Stellung gehalten.

Hat der Behälter 2 seine Entleerposition eingenommen, bewegt sich die Kolbenstange des Stellzylinders 16 nach oben, so daß der Stempel 18' im wesentlichen flächig auf den Boden des untersten, im Behälter 2 ruhenden Stückgutes 20 trifft und diesen infolge des außermittigen Kraftangriffs in Entleerrichtung, im Ausführungsbeispiel im Uhrzeigersinn, dreht und dann nach oben drückt. Hat der Stempel 18' seine Schwenkendstellung erreicht, wird das Stückgut 20 oder die übereinander liegenden Stückgüter 20 parallel zu sich nach oben geschoben, bis sie einzeln und nacheinander über den oberen Rand 2" und die Rutsche 22 auf den Gurtförderer 8 rutschen. Natürlich kann der Stempel 18' auch starr mit schräger, sich an den Boden des Stückgutes 20 anlegender Druckfläche ausgebildet sein.

Der Stempel 18 kann als flächige, einteilige Platte ausgebildet sein, wie in den Fig. 2 bis 4 dargestellt ist, der ein entsprechender Durchbruch 2' im Boden des Behälters 2 zugeordnet ist. Der Stempel 18 kann aber auch aus mehreren Teilstempeln 18" bestehen, die als einzelne Stäbe oder Stege ausgebildet sind, wie in den Fig. 5 und 6 gezeigt ist. Diese Teilstempel 18" stehen auf einer Stempelplatte 18''', so daß sie in beschriebener Weise auf- und abbewegt werden können, wobei sie in Form und Anzahl entsprechend angeordnete Durchbrüche 2''' im Boden des Behälters 2 durchstoßen und das darin liegende Stückgut 20 anheben. Die obere, gemeinsame Ebene dieser Teilstempel 18'' kann waagerecht, also parallel zum Boden des Behälters 2, oder auch schräg ausgebildet sein, um das Stückgut 20 in beschriebener Weise unmittelbar in die Schräglage zu bringen.

Der Behälter 2 kann innen ungeteilt sein, also einen einzigen Raum aufweisen, in den entsprechend großes Stückgut 20 gelegt ist. Er kann auch durch Zwischenwände 33 (Fig. 6) in Fächer 34 aufgeteilt sein, in denen das entsprechend kleinere Stückgut 20 liegt. Die Zwischenwand 33 kann im Behälter 2 unlösbar befestigt sein, sie kann aber auch ein Losteil darstellen, das bei Bedarf in den Behälter 2, vorzugsweise formschlüssig, z. B. durch Einstecken, eingesetzt wird. Die Durchbrüche 2''' im Boden des Behälters 2 sind als den Fächern 34 zugeordnete Gruppen angeordnet, denen entsprechend gruppenweise angeordnete Teilstempel 18'' zugeordnet sind. Zweckmäßigerweise sind die Gruppen der Teilstempel 18'' gleichartig ausgebildet, so daß jede Gruppe von Teilstempeln 18'' in jede Gruppe von Durchbrüchen 2''' allein oder gleichzeitig mit anderen eingeführt werden kann.

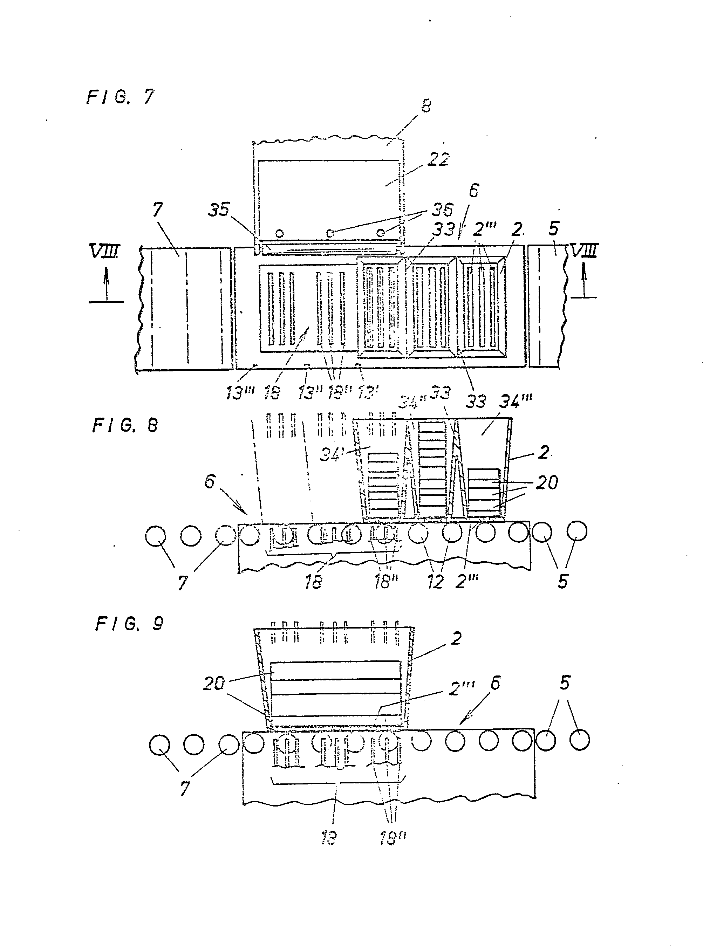

Da immer nur ein Stückgut 20 entladen werden darf, um das Ablesen und Zuordnen im nachgeschalteten Gurtförderer 8 zu ermöglichen, ergibt sich gem. den Fig. 7 und 8 der folgende Entleervorgang. Der Behälter 2 wird über die Rollenbahn 5 auf die Transportbahn 12 der Entleervorrichtung 6 transportiert. Sobald die erste Lichtschranke 13' der Positionier-Einrichtung 13 unterbrochen ist, wird der Transport gestoppt. Der Behälter 2 hat dann die erste Entleerposition erreicht, in der das erste Fach 34' entladen wird. Hierzu bewegt sich der Stempel 18 nach oben, wobei die erste Gruppe von Teilstempeln 18'' durch die Durchbrüche 2''' des ersten Faches 34' eintritt und das darin befindliche Stückgut 20 anhebt, während die beiden anderen Gruppen von Teilstempeln 18'' außen neben dem Behälter 2 leer nach oben fahren.

Mit Beginn des Entleervorganges wird eine Transportrolle 35 eingeschaltet, die vor der Rutsche 22 so angeordnet ist, daß das abrutschende Stückgut 20 sich nach kurzer Wegstrecke auf ihr abstützt. Da die Transportrolle 35 durch einen nicht dargestellten Antrieb in Drehung versetzt wird, wird das Stückgut 20 beschleunigt auf die Rutsche 22 befördert. Dadurch wird das Entleeren verkürzt. Der Transportrolle 35 unmittelbar nachgeschaltet ist eine Lichtschranke 36 o. dgl., über die das Stückgut hinweggleitet. Sobald die Lichtschranke 36 abgedeckt ist, wird der Vorschub des Stempels 18 unterbrochen, und zwar entweder solange, wie die Lichtschranke 36 durch das Stückgut 20 bedeckt oder separat zeitgesteuert ist. Damit ist sichergestellt, daß die Stückgüter 20 einzeln hintereinander ausgeladen werden. Das jeweilige Stoppen des Stückgutes 20 durch eine Lichtschranke 13 wird durch Abtasten der jeweils vorhandenen Zwischenwand 33 vorprogrammiert.

Hat der Stempel 18 seine strichpunktiert angedeutete obere Endstellung erreicht, wird er wieder in seine Ausgangsstellung abgesenkt und der Antrieb der Transportbahn 12 wird eingeschaltet. Der Behälter 2 rückt nach links in Transportrichtung vor, bis er die zweite Lichtschranke 13'' erreicht hat und wieder gestoppt wird. Er steht nun in der zweiten Entleerposition und das oben beschriebene Entleerspiel beginnt von neuem, wobei die erste und zweite Gruppe von Teilstempeln 18'' in die Durchbrüche 2''' des ersten Faches 34' und des zweiten Faches 34'' eindringen. Das zweite Fach 34'' wird entladen. Nach erbeutem Absenken des Stempels 18 in seine Ausgangsstellung rückt der Behälter 2 in die dritte Entleerposition auf Höhe der dritten Lichtschranke 13''' vor. Es treten nun alle Gruppen von Teilstempeln 18'' in die Durchbrüche 2''' aller Fächer 34', 34'' und 34''' ein, wobei das dritte Fach 34''' entladen wird. Nach Beendigung des letzten Entleervorganges wird der Behälter 2 auf den Leergutförderer 7 transportiert, während der Entleervorrichtung 6 der nächste beladene Behälter 2 zugeführt wird.

Hat der Behälter 2 keine Zwischenwände 33, ist also einräumig und gem. Fig. 9 entsprechend mit großem Stückgut 20 beladen, dann wird der Behälter 2 erst durch die dritte Lichtschranke 13''' gestoppt. Da die Durchbrüche 2''' im Boden des Behälters 2 entsprechend den Teilstempeln 18'' gruppenweise angeordnet sind, treten alle Teilstempel 18'' gleichzeitig in den Behälter 2 ein und heben das Stückgut 20 in beschriebener Weise an. Es ist ersichtlich, daß mit der gleichen Ausbildung des Stempels 18 Behälter 2 mit und ohne Zwischenwände 33, also großes und kleines Stückgut 20 entladen werden kann, wobei die Fächer 34 auch verschieden groß sein können, wenn z. B. die Fächer 34' und 34'' gemeinsam ein Fach bilden, von dem das Fach 34''' durch eine Zwischenwand 33 abgeteilt ist. Selbstverständlich ist die Zahl der Fächer 34 den Betriebsbedingungen anpaßbar.

Der Boden des Behälters 2 kann gem. Fig. 10 aus als lose eingesetzte, umrandete Platte ausgebildet sein, deren Rand als Führung dient und das Abrutschen beim Überragen der Bodenebene über den Rand 2'' des Behälters 2 verhindert. Denkbar ist auch das lösbare Verbinden von Stempel 18 und Boden des Behälters 2, z. B. mittels Zapfen oder Magnete, um das seitliche Abrutschen mit dem Stückgut 20 zu verhindern.

**Patentansprüche**

1. Vorrichtung zum Entleeren von mit übereinander liegendem, vorzugsweise flächigem Stückgut (20) beladenen Behältern (2), die auf einer Transportbahn (12) in den Entleerort transportiert werden, wo das Stückgut in die Entleerrichtung geneigt wird, dadurch gekennzeichnet, daß die Entleervorrichtung (6) eine Hubvorrichtung (16) mit einem Stempel (18, 18') aufweist, der von unten durch einen Durchbruch (2') in der Bodenebene des Behälters (2) gegen das Stückgut (20) bewegbar ist, wodurch das Stückgut (20) über den Rand (2") des Behälters (2) angehoben wird, so daß es in Entleerrichtung abrutscht.

2. Vorrichtung nach Anspruch 1, dadurch gekennzeichnet, daß die Transportbahn (12) in Entleerrichtung geneigt angeordnet ist.

3. Vorrichtung nach Anspruch 1, dadurch gekennzeichnet, daß die Transportbahn (12) und der Stempel (18) auf einem in Entleerrichtung kippbar gelagerten Rahmen (11) angeordnet ist.

4. Vorrichtung nach Anspruch 1, dadurch gekennzeichnet, daß der Stempel (18') eine sich gegen die Bodenfläche des Stückgutes (20) anlegende, schräge oder sich in Entleerrichtung neigende Fläche aufweist.

5. Vorrichtung nach einem der Ansprüche 1 bis 4, dadurch gekennzeichnet, daß der Behälter (2) einen lose eingelegten, vorzugsweise umrandeten und durch den Stempel (18, 18') nach oben bewegbaren Boden aufweist.

6. Vorrichtung nach einem der Ansprüche 1 bis 4, dadurch gekennzeichnet, daß der Behälter (2) im Boden mehrere Durchbrüche (2''') und der Stempel (18) den Durchbrüchen (2''') zugeordnete, auf einer Stempelplatte (18''') stehende Teilstempel (18") aufweist.

7. Vorrichtung nach Anspruch 6, dadurch gekennzeichnet, daß die Durchbrüche (2''') als in Entleerrichtung zeigende, parallel nebeneinander angeordnete Aussparungen und die Teilstempel (18") als nebeneinander auf der Stempelplatte (18''') stehende Stege ausgebildet sind.

8. Vorrichtung nach einem der Ansprüche 1 bis 6, dadurch gekennzeichnet, daß der Behälter (2) durch Zwischenwände (33) in Fächer (34) aufgeteilt und/oder aufteilbar ist und die Durchbrüche (2''') im Boden eines Faches (34) jeweils einer Gruppe von Teilstempeln (18") zugeordnet sind.

9. Vorrichtung nach Anspruch 8, dadurch gekennzeichnet, daß jede Gruppe von Teilstempeln (18") in die Durchbrüche (2''') eines jeden Faches (34) einführbar ist und daß gleichzeitig mehrere Gruppen von Teilstempeln (18") in die Durchbrüche (2''') mehrerer Fächer (34) einführbar sind.

10. Vorrichtung nach einem der Ansprüche 1 bis 9, dadurch gekennzeichnet, daß auf Höhe des oberen Randes (2") des Behälters (2) eine rahmenfeste Rutsche (22) vorgesehen ist, deren behälterseitigem Ende eine angetriebene Transportrolle (35) vorgelagert ist und daß der Transportrolle (35) in Entleerrichtung eine Lichtschranke (36) nachgeordnet ist.

11. Vorrichtung nach Anspruch 10, dadurch gekennzeichnet, daß die Lichtschranke (36) steuerungsmäßig mit dem Stempel (18, 18') so verbunden ist, daß nach Signalgebung durch ein abrutschendes Stückgut (20) der Stempelvorschub während der Abdeckung der Lichtschranke (36) durch das Stückgut (20) oder einer anderen, vorzugsweise einstellbaren Zeitspanne unterbrochen wird.

12. Vorrichtung nach einem der Ansprüche 1 bis 11, dadurch gekennzeichnet, daß an der Transportbahn (12) am Entleerort eine Positionier-Einrichtung (13) vorgesehen ist, die den Behälter (2) in der jeweiligen Entleerstellung stoppt.

13. Vorrichtung nach einem der Ansprüche 1 bis 12, dadurch gekennzeichnet, daß der Rutsche (22) ein Gutförderer (8) mit einer Leseeinrichtung (24) nachgeordnet ist.

14. Vorrichtung nach Anspruch 11, dadurch gekennzeichnet, daß die Lichtschranke (36) steuerungsmäßig mit dem Stempel (18) so verbunden ist, daß nach Signalgebung durch ein abrutschendes Stückgut (20) der Stempelvorschub während der Abdeckung der Lichtschranke (36) durch das Stückgut (20) oder einer anderen, vorzugsweise einstellbaren Zeitspanne unterbrochen wird.

**Claims**

1. Unit for discharging bins (2) loaded with piled up preferably flat piece goods (20) being transported on a conveyer runway (12) to the point of discharge where the piece goods are inclined in the discharge direction. The feature is that the discharge unit (6) is provided with a lifting device (16) with a ram (18, 18') that can be moved upward through an opening (2') in the bottom of the bin (2) to press on the piece goods (20). Hereby the piece goods (20) are lifted up beyond the edge (2") of the bin (2) so that they slide down in discharge direction.

2. Unit as per Claim 1. The feature is that the conveyer runway (12) is inclined in inclined discharging direction.

3. Unit as per Claim 1. The feature is that both the conveyer runway (12) and the ram (18) are installed on a ram frame (11) tilting in discharging direction.

4. Unit as per Claim 1. The feature is that the ram (18') has an inclined surface joining to the bottom surface of the piece goods (20) or a surface being inclined in discharging direction.

5. Unit as per one of the Claims 1 to 4 with the feature that the bin (2) is provided with an inlaid loose bottom preferrably having a rim and being movable in upward direction through the ram (18, 18').

6. Unit as per one of the Claims 1 to 4. The feature is that the bin (2) has several (bottom) bottom openings (2''') and that the ram (18) is subdivided into partial rams (18") for each of the openings (2''') being installed on a ram plate (18''').

7. Unit as per Claim 6. The feature is that the openings (2''') in discharge direction are shaped as parallel notches arranged side-by-side and the partial rams (18") as straps standing side-by-side on the ram plate (18''').

8. Unit as per one of the Claims 1 to 6. The feature is that the bin (2) is divided and/or divisible by sheet-steel walls (33) into compartments (34), and that the bottom openings (2''') of each of the compartments (34) are component parts of each group of partial rams (18'').

9. Unit as per Claim 8. The feature is that each group of partial rams (18'') can be introduced into the openings (2''') of each of the compartments (34) and that at the same time several groups of partial rams (18'') can be introduced into the openings of various compartments (34).

10. Unit as per one of the Claims 1 to 9. The feature is that on the level of the upper edge (2'') of the bin (2) a chute (22) is provided having a solid frame. Before the end on the side of the bin a driven driving roller (35) is installed. Behind the driving roller (35) a light barrier (36) is provided in discharge direction.

11. Unit as per Claim 10. The feature is that the light barrier control (36) is connected with the ram (18, 18') in such a manner that the ram feed is interrupted after signaling that a piece (20) is sliding down while the light barrier (36) is being covered either by the piece (20) or otherwise, preferrably by an adjustable timing.

12. Unit as per one of the Claims 1 to 11. The feature is that a positioning device (13) is provided on the conveyer runway (12) at the discharge point stopping the bin (2) in the relevant discharge position.

13. Unit as per one of the Claims 1 to 12. The feature is that behind the chute (22) a belt conveyer (8) is installed being equipped with a reader (24).

14. Unit as per Claim 11. The feature is that the light barrier (36) control is connected with the ram (18) in such a manner that the ram feed is interrupted after signaling that a piece (20) is sliding down while the light barrier (36) is being covered either by the piece (20) or otherwise, preferrably by an adjustable timing.

**Revendications**

1. Equipement pour le déchargement de containers (2) contenant des marchandises de détails (pièces) (20) préférablement plates qui sont empilées et transportées sur une voie transporteuse (12) vers l'endroit de déchargement où les pièces sont inclinées en direction de déchargement. Il est caractérisé par le fait que le dispositif de déchargement (6) est équipé d'un mécanisme élévateur (16) avec un poinçon (18, 18') actionnés d'en bas à travers l'ouverture au fond du container (2) contre les pièces (20) qui sont levées au-delà du bord (2'') du container (2) et qui glissent en direction inclinée de déchargement.

2. Equipement selon la revendication 1 caractérisé par le fait que la voie transporteuse (12) se trouve installée en direction inclinée de déchargement.

3. Equipement selon la revendication 1 caractérisé par le fait que la voie transporteuse (12) et le poinçon (18) sont montés sur un cadre (11) basculant en direction de déchargement.

4. Equipement selon la revendication 1 caractérisé par le fait que la surface oblique du poinçon (18') se met contre la surface de fond des pièces (20) inclinées en direction de déchargement.

5. Equipement selon une des revendications 1 à 4 caractérisé par le fait que le container (2) est pourvu d'un fond déposé amovible ayant préférablement un bord qui peut être élevé par le poinçon (18, 18').

6. Equipement selon une des revendications 1 à 4, caractérisé par le fait que le fond du container (2) a plusieurs ouvertures (2''') et que le poinçon (18) consiste en plusieurs poinçons partiels (18'') disposés sur une plaque porte-pistons et prévus pour les différentes ouvertures.

7. Equipement selon la revendication 6 caractérisé par le fait que les ouvertures (2''') sont conçues comme évidements disposés en position parallèle, un à côté de l'autre, en direction de déchargement et que les poinçons partiels (18'') sont installés en forme de barrettes sur la plaque porte-poinçons (18''').

8. Equipement selon une des revendications 1 à 6 caractérisé par le fait que le container (2) est partagé et/ou est partageable en rayons (34) par des cloisons (33) et que chaque fois un groupe de poinçons partiels (18'') fait partie des ouvertures (2''') au fond de chaque rayon (34).

9. Equipement selon la revendication 8 caractérisé par le fait que chaque groupe de poinçons partiels (18'') peut être introduit dans les ouvertures de n'importe quel rayon (34) et qu'en même temps plusieurs groupes de poinçons partiels (18'') peuvent être introduits dans les ouvertures (2''') de plusieurs rayons (34).

10. Equipement selon une des revendications 1 à 9 caractérisé par le fait qu'au niveau du bord supérieur (2'') du container (2) une goulotte (22) est prévue montée sur un cadre solide dont l'extrémité vers le container est précédée par un galet de roulement (35). Derrière ce galet de roulement (35), en direction de déchargement, un barrage photoélectrique (36) est installé.

11. Equipement selon la revendication 10 caractérisé par le fait que le contrôle du barrage photoélectrique (36) est raccordé au poinçon (18, 18') de manière à interrompre après signalation l'avancement du poinçon, soit par suite du recouvrement du barrage photoélectrique (36) par les pièces (20), soit par un autre moyen, préférablement par une minuterie réglable.

12. Equipement selon une des revendications 1 à 11 caractérisé par le fait qu'un dispositif de positionnement (13) est prévu sur la voie transporteuse (12) à l'endroit de déchargement arrêtant le container (2) dans la position relative de déchargement.

13. Equipement selon une des revendications 1 à 12 caractérisé par le fait que la goulotte (22) est suivie d'une courroie transporteuse (8) équipée d'un dispositif de lecture (24).

14. Equipement selon la revendication 11 caractérisé par le fait que le contrôle du barrage photoélectrique (36) est raccordé au poinçon (18) de manière à interrompre après signalisation l'avancement du poinçon, soit par suite du recouvrement du barrage photoélectrique (36) par les pièces (20), soit par un autre moyen, préférablement par une minuterie réglable.

FIG. 1

FIG. 2

FIG. 3

FIG. 4

FIG. 5

FIG. 6

FIG. 10

FIG. 7

FIG. 8

FIG. 9